# EUROPÄISCHE PATENTSCHRIFT

(11) **EP 0 403 685 B1**
(45) Veröffentlichungstag und Bekanntmachung des Hinweises auf die Patenterteilung: **17.02.1993**
(21) Anmeldenummer: 89113331.6
(22) Anmeldetag: 20.07.1989
(51) Int. Cl.: B29C 53/58, B29D 23/22

(54) **Verfahren zur Herstellung eines Rohrkörpers einer Expansionswelle**
Process to produce a pipe section of an expandable shaft
Procédé de fabrication de la partie en forme d'un tuyau d'un arbre expansible

(30) Priorität: 15.06.1989 DE 8907321 U
(43) Veröffentlichungstag der Anmeldung: 27.12.1990
(73) Patentinhaber: Chlupsa, Christian, D-63225 Langen (DE); Vetter, Walter, D-64572 Büttelborn (DE)
(72) Erfinder: Chlupsa, Otto, (DE)
(74) Vertreter: Gudel, Diether, Dr.

(56) Entgegenhaltungen:
- EP-A- 0 122 024
- EP-A- 0 301 631
- DE-B- 1 159 698
- DE-U- 8 634 752
- DE-U- 8 708 474
- GB-A- 1 480 928
- US-A- 2 878 038
- US-A- 3 765 980
- US-A- 4 563 321
- US-A- 4 773 656
- US-A- 4 787 583

## Beschreibung

Die Erfindung betrifft ein Verfahren zur Herstellung eines mit Durchbrüchen versehenen Rohrkörpers einer Expansionswelle.

Expansionswellen können gesteuert ihren Durchmesser verändern, damit Hülsen, auf die Warenbahnen aufgewickelt sind, mit Hilfe der Expansionswellen drehbar gelagert und ggf. angetrieben werden können. Damit die Expansionswellen ihren Durchmesser verändern können, sind sie mit Durchbrüchen versehen, durch die in radialer Richtung der Welle Klemmkörper hindurchtreten können, die die notwendige Veränderung des Außendurchmessers der Expansionswelle bewirken. Ein Beispiel für derartige Expansionswellen ist in der US-PS 4,773,656 oder in der parallelen deutschen Gebrauchsmusterschrift 86 34 752 beschrieben.

Die Rohrkörper herkömmlicher Expansionswellen bestehen aus Stahl oder Aluminium. Für die Herstellung der Durchbrüche im Rohrkörper wird ein Stahlrohr entsprechend spanabhebend bearbeitet. Dies ist sehr arbeitsaufwendig. Außerdem hat ein derartiger Rohrkörper ein beträchtliches Gewicht, bedingt durch das verwendete Metall.

Zum Stand der Technik zählen schon Verfahren zur Herstellung von Rohrkörpern in Leichtbauweise, wobei die Rohrkörper in Sandwichbauweise eine Schicht aus Wabenmaterial aufweisen, an die sich ein Innenmantel und ein Außenmantel, jeweils aus kunstharzgetränkten Fasern, anlegen. Vgl. die US-A-4,563,321 oder auch die DE-U-87 08 474. Mit Durchbrüchen versehene Rohrkörper von Expansionswellen sollen mit diesen vorbeschriebenen Verfahren aber nicht hergestellt werden.

Die US-A-3,765,980 beschreibt ein Verfahren zur Herstellung eines mit einer Vielzahl von Düsenöffnungen versehenen Rohrkörpers, wobei in Öffnungen eines rohrförmigen Grundkörpers Stifte eingesteckt werden, um die Fasern eines Außenmantels derart gelegt werden, daß die Stifte frei bleiben. Die Fasern werden anschließend mit Kunstharz getränkt. Nach dem Herausziehen der Stifte und dem Aushärten des Kunstharzmaterials entsteht so ein Rohrkörper in Leichtbauweise mit einer Vielzahl von über seinen Umfang und seine Länge vorgesehenen Durchbrüchen, die als Düsen dienen. Ein Rohrkörper in Sandwichbauweise, wie vorstehend erläutert, wird nach diesem Verfahren aber nicht hergestellt.

Der Erfindung liegt daher die Aufgabe zugrunde, ein Verfahren vorzuschlagen, mit dem ein mit Durchbrüchen versehener Rohrkörper einer Expansionswelle hergestellt werden kann, der sich durch ein fühlbar verringertes Gewicht auszeichnet, ohne daß darunter seine mechanischen Eigenschaften leiden.

Zu Lösung dieser Aufgabe ist die Erfindung dadurch gekennzeichnet, daß auf einer Innenform entsprechend dem lichten Durchmesser des Rohrkörpers mit an der Innenform angebrachten Formstücken entsprechend den Durchbrechen des Rohrkörpers in Sandwichbauweise übereinander ein Innenmantel, ein Außenmantel und zwischen diesen eine Mittelschicht aufgebracht werden, ggf. darauf aufbauend eine weitere Mittelschicht und ein weiterer Außenmantel, wobei der Innenmantel und der Außenmantel aus Fasern gelegt werden und die Mittelschicht aus einem Wabenmaterial aufgebracht wird, und wobei die Fasern ohne diese zu durchtrennen um die Formstücke gelegt werden, worauf der Aufbau mit Kunstharz getränkt wird, das anschließend aushärtet, wobei als Innenmantel ein Faservlies, Fasergelege oder Fasergewebe verwendet wird, auf dessen Außenseite ein Faserkabel aufgebracht wird und als Außenmantel ein Fasergewebe verwendet wird, auf das ein Faserkabel aufgebracht wird und auf dieses wiederum ein Faserband (6), und wobei der Innenmantel und/oder der Außenmantel Fasern (10) haben, die sich im wesentlichen in axialer Richtung (9) des Rohrkörpers erstrecken.

Man verläßt somit die Lehre des Standes der Technik, wonach derartige Rohrkörper grundsätzlich aus geeignetem Metall (Vollmaterial) hergestellt werden müssen und stellt erfindungsgemäß den Rohrkörper grundsätzlich vielmehr in einer Sandwichbauweise aus leichtgewichtigem Wabenmaterial in einer Mittelschicht her, das beidseits von Kohlefaserschichten abgedeckt ist. Der gesamte Aufbau wird anschließend mit Kunstharz getränkt, so daß sich nach der Aushärtung des Kunstharzes ein vollständig stabiles Gebilde ergibt. Versuche haben ergeben, daß ein nach dem erfindungsgemäßen Verfahren hergestellter Rohrkörper nur etwa ein Zehntel eines Rohrkörpers nach dem Stand der Technik wiegt, und zwar bei gleichen mechanischen Eigenschaften, insbesondere gleicher Biegebelastbarkeit.

Wichtig für die angestrebte hohe Biegebelastung des nach dem erfindungsgemäßen Verfahren hergestellten Rohrkörpers ist es, daß die Fasern zumindest teilweise und im wesentlichen in axialer Richtung des Rohrkörpers verlaufen. Sie nehmen die Biegebeanspruchungen auf. Um den Verbund der Fasern nicht zu schwächen, sieht ein wichtiges erfinderisches Merkmal vor, daß die Fasern um die die Durchbrüche ergebenenden Formstücke gelegt werden, und zwar ohne sie dabei zu durchtrennen. Dadurch können die Fasern trotz der für die Durchbrüche vorgesehenen Formstücke ihre Aufgabe zum Aufnehmen der im Betrieb auftretenden Belastungen praktisch ungemindert übernehmen, weil sie gegenüber dem ungestörten Zustand praktisch nur geringfügig und lokal verschoben werden müssen. Es schadet hierbei natürlich nicht, wenn einige wenige der Fasern, beispielsweise unabsichtlich, hierbei durchtrennt werden, solange der Rohrkörper seinen im Betrieb an ihn gestellten Belastungen nach wie vor standhält.

Die mit einem derart leichtgewichtigen Rohrkörper bzw. mit der entsprechend komplettierten Expansionswelle einhergehenden Vorteile liegen auf der Hand. Beispielsweise müssen nur entsprechend geringere Massen gelagert, beschleunigt und abgebremst werden.

Für das Wabenmaterial wird man eine Wabenstruktur aus Papiermaterial oder Kunststoff verwenden. Der Kunstharz verbindet den Sandwichaufbau untrennbar zu einem einstückigen Rohr.

Den Innenmantel und den Außenmantel aus dem kunstharzgetränkten Fasergewebe wird man je nach den Anforderungen aufbauen.

Das Fasergebewebe des Innenmantels sorgt für eine glatte Fläche beim Herstellen des Rohres, so daß dieses, ggfs. mit Hilfe eines geeigneten Trennmittels, leicht von einem Grundrohr abgezogen werden kann, auf dem das erfindungsgemäße Rohr hergestellt wird. Außerdem liefert das Fasergewebe den notwendigen Grundaufbau für die darauf aufgebrachten Faserkabel. Unter einem Kohlefaserkabel versteht man im Sinne der Erfindung eine Vielzahl von sich in axialer Richtung des Rohres erstreckenden Fasern. Diese sorgen vor allem für die angestrebte hohe Biegesteifigkeit des Rohres.

Das Fasergewebe des Außenmantels deckt das Wabenmaterial ab und sorgt dafür, daß kein flüssiges Kunstharz in die Waben eindringt. Es liefert außerdem den notwendigen Aufbau für die darüber befindliche Schicht der Faserkabel, die sich auch hier im wesentlichen in Längsrichtung (Axialrichtung) des Rohres erstrecken und die wesentlich zur angestrebten hohen Biegesteifigkeit des Rohres beitragen. Der Aufbau wird nach außen von einem Faserband abgeschlossen, das die notwendige glatte Außenfläche des Rohres ergibt.

Auch bezüglich des Aufbaus des Außenmantels gilt das vorstehend zum Innenmantel Gesagte, d.h. daß das Fasergewebe vorzugsweise nach Art eines Strumpfes ausgebildet ist mit sich spitzwinklig kreuzenden Strängen aus den Fasern. Das Faserkabel besteht im wesentlichen aus einer Vielzahl von sich in axialer Richtung erstreckenden und rings um das Rohr angeordneten, zueinander im wesentlichen parallelen und nur gering miteinander verzwirnten Fasern. Das Faserband schließlich besteht ebenfalls aus sich im wesentlichen in axialer Richtung erstreckenden Fasern, die aber durch Querfäden zu einem flachen, leicht handhabbaren Band miteinander verbunden sind. Das Faserband muß sich nicht in axialer Richtung erstrecken, sondern kann beispielsweise auch spiralig aufgewickelt sein.

Allgemein sei erläutert, daß der Aufbau des Innenmantels und/oder des Außenmantels nicht aus reinen Kohlefasern bestehen muß. Kohlefasern oder Aramidfasern sollen aber überwiegen. Es können andere Fasern beigemischt sein, beispielsweise Glasfasern.

Die Erfindung wird im folgenden anhand eines Ausführungsbeispiels näher erläutert, aus dem sich weitere wichtige Merkmale ergeben. Dabei wird als Beispiel von Kohlefasern gesprochen. Statt dessen oder zusätzlich können aber auch Aramidfasern vorgesehen sein, oder auch Fasern aus anderen Materialien, die den notwendigen Anforderungen, insbesondere an die Zugfestigkeit, genügen.
Fig. 1 - zeigt schematisch in einer Stirnansicht einen erfindungsgemäßen Rohrkörper, wobei zur Verdeutlichung der Aufbau des Rohrkörpers in der Einzelheit X vergrößert herausgezeichnet ist;
Fig. 2 - 5 zeigen in vergrößertem Maßstab und in Draufsicht ein Kohlefasergewebe, ein Kohlefaserkabel, ein Kohlefaserband und ein Wabenmaterial in dieser Reihenfolge;
Fig. 6 - schematisch eine Seitenansicht zur Erläuterung des erfindungsgemäßen Herstellungsverfahrens und
Fig. 7 - ebenfalls schematisch eine Draufsicht auf einen Ausschnitt von Fig. 6 in Richtung des Pfeiles A.

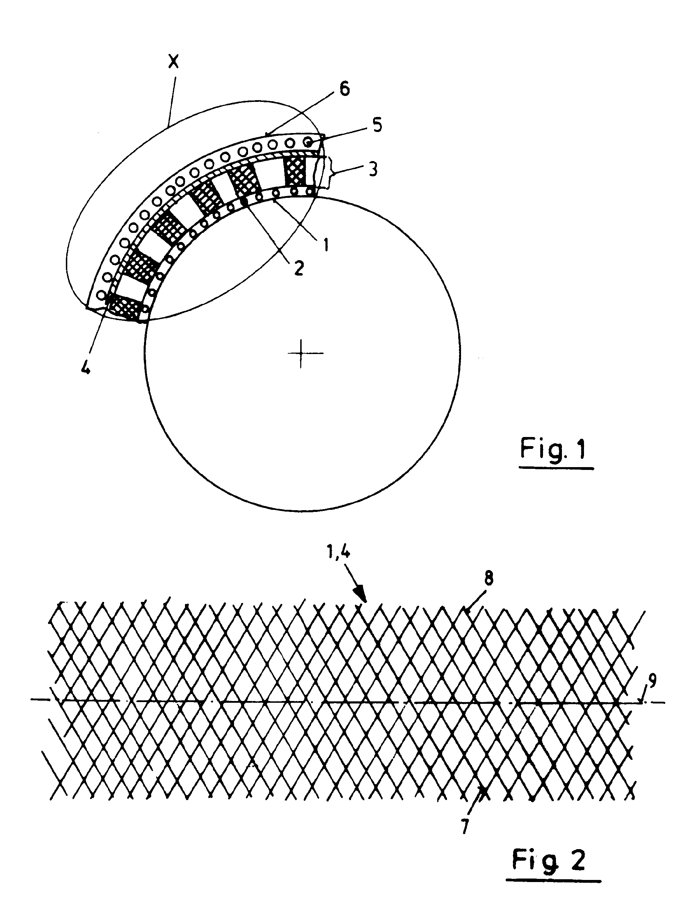

Der Rohrkörper besteht aus einem Innenmantel, einer Mittelschicht aus Wabenmaterial und einem Außenmantel. Der Innenmantel besteht aus einem Kohlefasergewebe 1, über dem sich Kohlefaserkabel 2 befinden. (Vgl. Fig. 1)

Die Mittelschicht besteht aus einem Wabenmaterial 3 aus geeignetem Papiermaterial, welches gegebenenfalls lackiert oder kunstharzgetränkt ist. Dies ist ein handelsübliches Produkt.

Der Außenmantel besteht aus einem Kohlefasergewebe 4, das grundsätzlichdem Kohlefasergewebel entspricht. Darüber befindet sich ein Kohlefaserkabel 5 entsprechend dem Kohlefaserkabel 2 und nach außen ist das Rohr von einem Kohlefaserband 6 abgedeckt. Dies verläuft vorzugsweise spiralig um das Rohr.

Der aus den Schichten 1,2 bestehende Innenmantel ist kunstharzgetränkt und dasselbe gilt für den Außenmantel, der aus den schichten 4,5,6 besteht.

Die Mittelschicht braucht nicht aus Papiermaterial zu bestehen. Für sie kann vielmehr jedes geeignete Material in Wabenform verwendet werden. Die die Waben ausbildenden Wände verlaufen in radialer Richtung.

Fig. 2 zeigt eine Ansicht des flach gelegten Kohlefasergewebes 1,4, aus der auch die sich spitzwinklig kreuzenden Stränge 7,8 aus Kohlefasern ersichtlich sind.Die Achse des Rohres nach Fig. 1 ist bei Pos. 9 angedeutet.

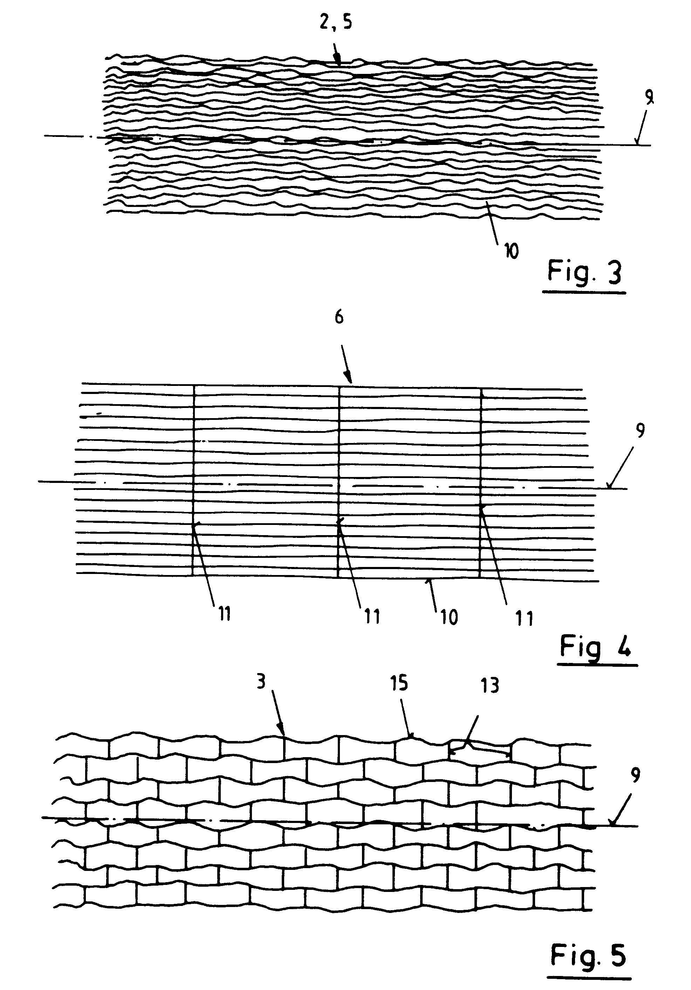

Fig. 3 zeigt - ebenfalls flach gelegt - das Kohlefaserkabel 2,5, das aus einer Vielzahl von sich in axialer Richtung 9 erstreckenden, zueinander im wesentlichen parallelen und nur gering miteinander verzwirnten Kohlefasern 10 besteht.

Fig. 4 zeigt das - ebenfalls flach gelegte - Kohlefaserband 9, bei dem die Kohlefasern 10 durch Querfäden 11 zu einem Band miteinander verbunden sind.

Fig. 5 zeigt das ebenfalls flach gelegte Wabenmaterial 3 mit Längsstegen 12, die über auf Lücke gesetzte Querstege 13 miteinander verbunden sind. In Wirklichkeit wird das Wabenmaterial durch sich in Querrichtung erstreckende, wellenförmige Bänder gebildet, die an den Basen ihrer U-Profile jeweils miteinander verklebt sind. Die doppelt gelegten Basen bilden die Querstege 13 aus und die Schenkel der U-Profile die Längsstege 12.

Der beschriebene Rohrkörper dient nach entsprechender Komplettierung als Expansionswelle.

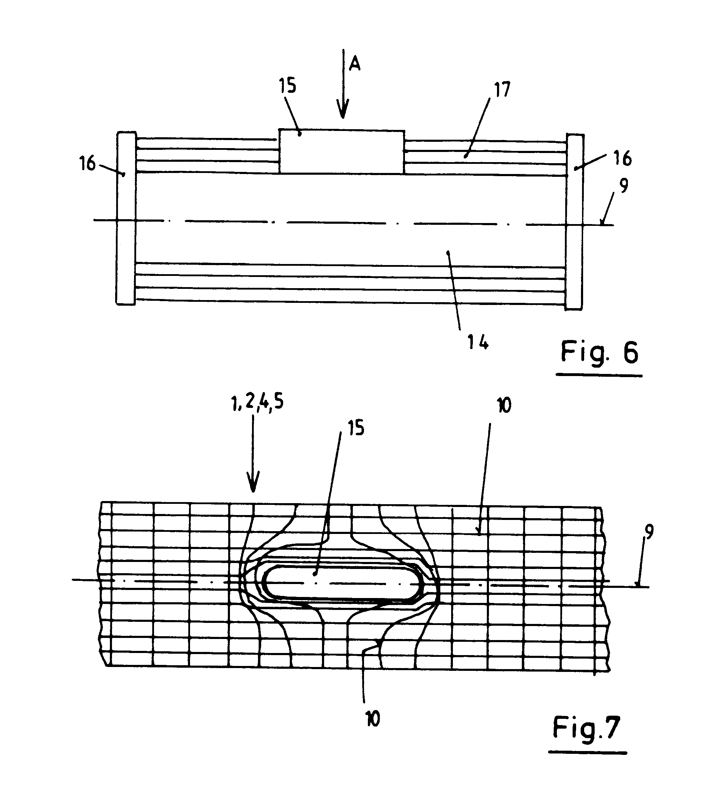

Die Fig. 6 und 7 erläutern im einzelnen die Verfahrensschritte zur Herstellung eines derartigen Rohrkörpers. Hierzu zeigt Fig. 6 eine Innenform 14 (Rohr) an dem Formstücke 15 entsprechend den herzustellenden Durchbrüchen des Rohrköpers befestigt sind. Die Formstücke bestehen beispielsweise aus entsprechend gebogenen Blechstücken, die auf die Innenform 14 aufgeklebt sind. Auch andere Befestigungsmöglichkeiten und Hertellungsarten für die Formstücke sind möglich. Außerdem sei erwähnt, daß in Fig. 6 der Einfachheit halber nur ein einziges der Formstücke gezeigt ist, in Wirklichkeit gibt es mehrere dieser Formstücke, ggf. auch mit unterschiedlichen Abmessungen und/oder Profilierungen.

Auf die Enden der Innenform 14 werden Ringe 16 aufgeschoben, die die Form komplettieren

Anschließend wird der vorstehend anhand der Fig. 1 bis 5 erläuterte Sandwichaufbau 17 über die Innenform aufgebracht, wobei die Kohlefasern 7,8,10 im Bereich der Formstücke 15 nicht durchtrennt werden, sondern erfindungsgemäß um die betreffenden Formstücke 15 herumgelegt werden, ohne diese zu durchtrennen. Vgl. hierzu Fig. 7.

Anschließend wird der Sandwichaufbau mit Kunstharz getränkt und nach dem Aushärten des Kunstharzes werden die Formstücke 15 abgenommen und der fertige Rohrkörper mit seinen Durchbrüchen entsprechend den Formstücken 15 kann von der Innenform 14 abgezogen werden. Er kann dann zu einer Expansionswelle oder Wickelwelle komplettiert werden.

Die den Formstücken 15 entsprechenden Durchbrüche im Wabenmaterial 3 wurden vorher aus dem Wabenmaterial herausgetrennt, beispielsweise durch entsprechende Stanzen oder mit Hilfe eines Messers.

## Patentansprüche

1. Verfahren zur Herstellung eines mit Durchbrüchen versehenen Rohrkörpers einer Expansionswelle,
**dadurch gekennzeichnet,**
daß auf einer Innenform (14) entsprechend dem lichten Durchmesser des Rohrkörpers mit an der Innenform angebrachten Formstücken (15) entsprechend den Durchbrüchen des Rohrkörpers in Sandwichbauweise übereinander ein Innenmantel (1,2), ein Außenmantel (4,5,6) und zwischen diesen eine Mittelschicht (3) aufgebracht werden, ggf. darauf aufbauend eine weitere Mittelschicht und ein weiterer Außenmantel, wobei der Innenmantel und der Außenmantel aus Fasern gelegt werden und die Mittelschicht aus einem Wabenmaterial aufgebracht wird, und wobei die Fasern (10) ohne diese zu durchtrennen um die Formstücke (15) gelegt werden, worauf der Aufbau mit Kunstharz getränkt wird, das anschließend aushärtet, wobei als Innenmantel ein Faservlies, Fasergelege oder Fasergewebe (1) verwendet wird, auf dessen Außenseite ein Faserkabel (2) aufgebracht wird und als Außenmantel ein Fasergewebe (4) verwendet wird, auf das ein Faserkabel (5) aufgebracht wird und auf dieses wiederum ein Faserband (6), und wobei der Innenmantel und/oder der Außenmantel Fasern (10) haben, die sich im wesentlichen in axialer Richtung (9) des Rohrkörpers erstrecken.

2. Verfahren nach Anspruch 1,
**dadurch gekennzeichnet,**
daß für den Durchtritt der Formstücke (15) Durchbrüche aus dem Wabenmaterial (3) herausgetrennt werden.

3. Verfahren nach Anspruche 1 oder 2,
**dadurch gekennzeichnet,**
daß für das Wabenmaterial (3) ein Papiermaterial oder Kunststoff verwendet wird.

4. Verfahren nach einem der Ansprüche 1 bis 3,
**dadurch gekennzeichnet,**
daß als Bestandteile des Innenmantels (1, 2) und/oder des Außenmantels (4,5,6) zumindest überwiegend Kohlefasern und/oder Aramidfasern verwendet werden.

## Claims

1. A process for the manufacture of a tubular body of an expansion shaft said tubular body having apertures therein, characterized in that on an inner form (14) according to the inside diameter of the tubular body provided with form pieces (15) mounted at the inner form according to the apertures of the tubular body, an inner coat (1, 2), an outer coat (4, 5, 6) and between these a central layer (3) are applied superposed in sandwich construction, possibly constructing upon this a further central layer and a further outer coat, wherein the inner coat and the outer coat are laid of fibers and the central layer is applied of a honeycomb material, and wherein the fibers (10) are placed around the form pieces (15) without seperating the fibers, whereupon the construction is saturated with artificial resin which subsequently is hardening, wherein as inner coat a fiber vleece, a fiber nest or a fiber texture (1) is used, on the outside of which a fiber cable (2) is applied, and as an outer coat a fiber texture (4) is used onto which a fiber cable (5) is applied and onto same again a fiber band (6), and wherein the inner coat and/or the outer coat are provided with fibers (10) extending substantially in axial direction (9) of the tubular body.

2. A process according to claim 1, characterized in that for the passage of the form pieces (15) pieces are separated from the honeycomb material.

3. A process according to claims 1 or 2, characterized in that for the honeycomb material (3) a paper material or a plastic material is used.

4. A process according to any of claims 1 to 3, characterized in that as components of the inner coat (1, 2) and/or of the outer coat (4, 5, 6) at least mostly carbon fibers and/or aramide fibers are used.

## Revendications

1. Procédé pour fabriquer un corps tubulaire, pourvu de passages, d'un arbre d'expansion,
caractérisé en ce
que sur une forme intérieure (14), dont le diamètre correspond au diamètre intérieur du corps tubulaire et sur laquelle des pièces de forme (15) sont disposées d'une manière qui correspond aux passages du corps tubulaire, on dépose en superposition, selon une structure sandwich, une enveloppe intérieure (1, 2), une enveloppe extérieure (4, 5, 6) et, entre ces enveloppes, une couche centrale (3), et éventuellement on forme sur ces couches une couche centrale supplémentaire et une autre enveloppe extérieure, dans lequel on dispose l'enveloppe intérieure et l'enveloppe extérieure formée de fibres et on dépose la couche centrale formée d'un matériau en nid d'abeilles, et dans lequel on dispose les fibres (10), sans les séparer, autour des pièces de forme (15), à la suite de quoi on imprègne la structure avec une résine synthétique, qui consécutivement durcit, dans lequel on emploie comme enveloppe intérieure un voile de fibres, une nappe de fibres, un dépôt de fibres ou un tissu de fibres (1), sur le côté extérieur de laquelle on dépose un câble de fibres (2) et, comme enveloppe extérieure, on emploie un tissu de fibres (4), sur lequel on dépose un câble de fibres (5) et, à nouveau, sur ce dernier, une bande fibres (6), et dans lequel l'enveloppe intérieure et/ou l'enveloppe extérieure possèdent des fibres (10), qui s'étendent sensiblement dans la direction axiale (9) du corps tubulaire.

2. Procédé selon la revendication 1, caractérisé en ce que pour la traversée des pièces de forme (15), on réalise par enlèvement par découpage des passages à partir du matériau en nid d'abeilles (3).

3. Procédé selon les revendications 1 ou 2, caractérisé en ce que pour le matériau en nid d'abeilles (3), on emploie un matériau en papier ou en matière plastique.

4. Procédé selon l'une des revendications 1 à 3, caractérisé en ce qu'on emploie comme composants de l'enveloppe intérieure (1, 2) et/ou de l'enveloppe extérieure (4, 5, 6), au moins de façon prépondérante des fibres de carbone et/ou des fibres d'aramide.
